Europäisches Patentamt

European Patent Office

Office européen des brevets

(19)

(11) Veröffentlichungsnummer: **0 237 619**
**B1**

(12) **EUROPÄISCHE PATENTSCHRIFT**

(45) Veröffentlichungstag der Patentschrift: **07.11.90**

(21) Anmeldenummer: **86113795.8**

(22) Anmeldetag: **05.10.86**

(96) **Ein Antrag gemäss regel 88 EPÜ auf Hinzufügung von zwei Seiten mit den Patentansprüchen 1-5 liegt vor.**

(51) Int. Cl.⁵: **B 60 G 17/02,** B 60 G 5/04, B 60 P 1/02, B 60 G 11/18

(54) **Radaufhängung für absenkbare Fahrzeugaufbauten, insbesondere für Anhänger, frontangetriebene LKW(Bus-Kombi), Wohnmobile.**

(30) Priorität: **05.10.85 DE 3535589**

(43) Veröffentlichungstag der Anmeldung:
**23.09.87 Patentblatt 87/39**

(45) Bekanntmachung des Hinweises auf die Patenterteilung:
**07.11.90 Patentblatt 90/45**

(84) Benannte Vertragsstaaten:
**BE CH ES FR GB IT LI NL**

(56) Entgegenhaltungen:
**DE-A-2 903 934**
**DE-B-1 155 682**
**DE-C- 622 994**
**DE-C- 623 747**
**DE-C- 976 856**
**DE-U-8 337 131**
**US-A-2 779 602**

(73) Patentinhaber: **Sieben, Hans Hermann**
**Neugasse 15**
**D-6501 Zornheim (DE)**

(72) Erfinder: **Sieben, Hans Hermann**
**Neugasse 15**
**D-6501 Zornheim (DE)**

Courier Press, Leamington Spa, England.

**Beschreibung**

Die Erfindung bezieht sich auf eine Radaufhängung für absenkbare Fahrzeugaufbauten nach dem Oberbegriff des Patentanspruchs 1.

Eine Radaufhängung dieser Gattung ist aus der DE—A—2903934 bei einer Tandemachsanordnung bekannt, bei der die Hebel der Halbachsrohre der Räder der gleichen Fahrzeugseite über den Hydraulikzylinder im Sinne eines Raddruckausgleichs derart gegeneinander abgestützt sind, daß bei in die gleiche Richtung weisenden Schwinghebeln der eine Hebel nach oben und der andere Hebel nach unten weist. Das hat den Nachteil, daß der nach unten weisende Hebel in der abgesenkten Stellung auf dem Boden aufsitzen kann, z.B. im Bereich eines Randsteins. Ein weiterer Nachteil besteht darin, daß der Achsabstand nicht kleiner gemacht werden kann als der Raddurchmesser, was bei einem Rangieren zu erhöhtem Reifenverschleiß führt. Der größte Nachteil dieser bekannten Radaufhängung besteht aber darin, daß die Halbachsrohre einzeln am Fahrzeugaufbau drehbar gelagert sind, was einen hohen Montageaufwand und zeitraubende und kostspielige Ausrichtarbeiten erfordert. Die gleichen Nachteile weist eine andere bekannte Radaufhängung für absenkbare Fahrzeugaufbauten nach der DE—B—2546485 auf, bei der anstelle von Halbachsrohren durchgehende Achsrohre verwendet sind, die auf den am Fahrzeugaufbau einzeln gelagerten Schwinghebelzapfen drehbar gelagert sind. Bei dieser bekannten Radaufhängung kommt als weiterer Nachteil hinzu, daß die beiden Fahrzeugseiten nicht unabhängig voneinander absenkbar sind, was unbedingt erforderlich ist, wenn ein Ausrichten des Fahrzeugaufbaus auf unebenem Untergrund vorgenommen werden soll.

Der Erfindung liegt daher die Aufgabe zugrunde, eine Radaufhängung der eingangs genannten Gattung so weiterzubilden, daß der Montageaufwand am Fahrzeugaufbau verringert wird und daß zeitraubende und kostspielige Ausrichtarbeiten entfallen können.

Die Lösung dieser Aufgabe erfolgt durch die Merkmale des Patentanspruchs 1.

Zwar ist aus der DE—B—1155682 eine Radaufhängung für nichtabsenkbare Fahrzeugaufbauten bekannt, bei der die Radachszapfen von in Fahrzeuglängsrichtung verlaufenden Schwinghebeln getragen werden, welche in einem durchgehenden Tragrohr drehbar gelagert sind. Dabei sind jeweils zwei fest am Fahrzeugaufbau anbringbare Tragrohre übereinander angeordnet, in denen an beiden Enden je ein Schwinghebel gelagert ist, wobei auf beiden Seiten von den beiden über einen Träger für den Radachszapfen paralellogrammartig miteinander gelenkig verbundenen Schwinghebeln der eine mit seinem Lagerzapfen von Außenende her in das Tragrohr eingesteckt und in diesem durch eine in eine Ringnut am Lagerzapfen eingreifende Schraube in Längsrichtung fixiert ist, während die Fixierung des ebenfalls von Außenende her in das Tragrohr eingesteckten Lagerzapfens des anderen Schwinghebels ausschließlich durch eine einerseits am Tragrohr und andererseits am Lagerzapfen verankerte Drehstabfeder erfolgt. Da diese bekannte Radaufhängung jedoch keine drehbar gelagerten Halbachsrohre aufweist und zur Schaffung einer Absenkmöglichkeit des Fahrzeugaufbaus völlig ungeeignet ist, konnte sie keine Lehre für die Erfindung sein.

Zweckmäßige Ausgestaltungen des Gegenstandes von Patentanspruch 1 sind in den Unteransprüchen gekennzeichnet. Mit der Ausgestaltung nach Anspruch 3 wird der Vorteil erzielt, daß der Achsabstand bei einer Tandemachsanordnung beliebig weit verringert werden kann, z.B. indem die vorderen und hinteren Räder gegeneinander versetzt und einander überlappend angeordnet werden.

Hierdurch wird der Reifenverschleiß beim Rangieren wesentlich verringert und das Rangieren auf der Stelle sehr erleichtert. Weiterhin wird durch die Ausgestaltung nach Anspruch 3 der Vorteil erzielt, daß kein nach unten weisender Hebel in der abgesenkten Stellung auf dem Untergrund aufsitzen kann und in der abgesenkten Stellung alle Radaufhängungsteile innerhalb des Radkastens liegen, was die Verwendung dieser Ausführungsform für Bootsanhänger und dgl. ermöglicht. Mit den kennzeichnenden Merkmalen der Ansprüche 7 bis 9 wird in überraschend einfacher Weise die Anbringung von Stoßdämpfern ermöglicht, die beim Absenkvorgang nicht stören.

Ausführungsbeispiele der Erfindung werden in der folgenden Beschreibung anhand der Zeichnungen erläutert. In diesen zeigen:

Fig. 1 eine Tandemachsanordnung mit einer Radaufhängung nach der Erfindung teilweise geschnitten im Grundriß

Fig. 2 die Tandemachsanordnung nach Fig. 1 von der Seite gesehen in der Fahrtstellung

Fig. 3 eine Einzelheit von Fig. 1 in vergrößerter und teilweise demontierter Darstellung

Fig. 4 eine Tandemachsanordnung ähnlich Fig. 1, jedoch mit verkürztem Achsabstand.

Fig. 5 die Tandemachsanordnung nach Fig. 4 von der Seite gesehen in der Fahrtstellung

Fig. 6 die Tandemachsanordnung nach Fig. 5 in der abgesenkten Stellung

Fig. 7 die Anordnung eines Stoßdämpfers in Fig. 4 in vergrößerter Darstellung

Fig. 8 die Anordnung des Stoßdämpfers nach Fig. 7 von der Seite gesehen

Fig. 9 eine Einzelachsanordnung mit einer Radaufhängung nach der Erfindung teilweise geschnitten im Grundriß

Fig. 10 die Einzelachsanordnung nach Fig. 9 von der Seite gesehen in der Fahrtstellung

Fig. 11 die Einzelachsanordnung nach Fig. 10 in der abgesenkten Stellung

Fig. 12 eine abgewandelte Ausführungsform der Einzelachsanordnung nach Fig. 9

Fig. 13 die Einzelachsanordnung nach Fig. 12 von hinten gesehen

Fig. 14 die Einzelachsanordnung nach Fig. 12 und 13 von der Seite gesehen, in der Fahrstellung

Fig. 15 die Einzelachsanordnung nach Fig. 14 in der abgesenkten Stellung.

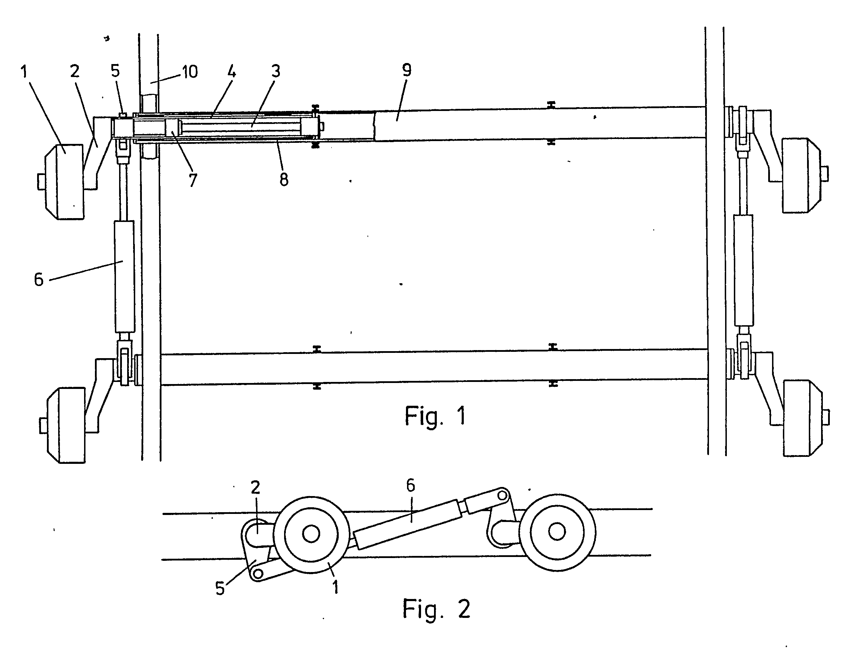

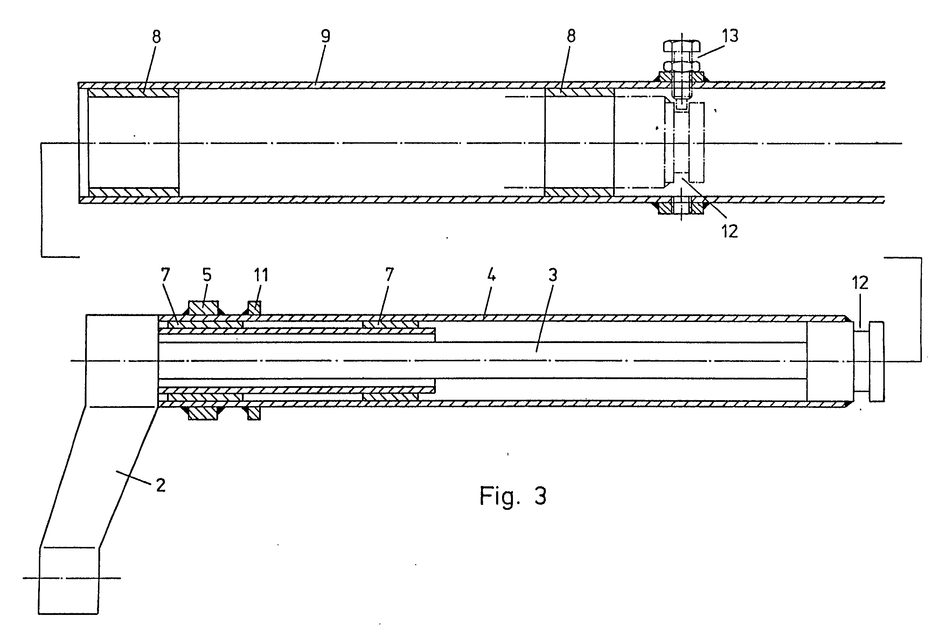

Übereinstimmend bei allen Ausführungsbeispielen sind die Räder 1 an Schwinghebeln 2 gelagert, die in Halbachsrohren 4 über Lagerbüchsen 7 drehbar gelagert und über Drehstäbe 3 abgefedert sind, die im gleichen Halbbachsrohr 4 verankert sind. Die zu den Rädern 1 der gleichen Fahrzeugachse gehörenden Halbachsrohre 4 sind in einem gemeinsamen, am Fahrzeugaufbau 10 festen Tragrohr 9 über Lagerbüchsen 8 um eine zu den Radachsen parallele Achse derart drehbar gelagert, daß sie von den entgegengesetzten Außenenden her in das Tragrohr 9 eingesteckt und in diesem durch eine gekonterte Schraube 13 fixiert sind, welche mit einem zylindrischen Fortsatz in eine Ringnut 12 am inneren Ende des Halbachsrohres 4 eingreift. Am äußeren Ende jedes Halbachsrohres 4 ist ein radial abstehender Hebel 5 angebracht, an welchem ein Hydraulikzylinder 6 angreift, mit dem das Halbachsrohr 4 aus einer Fahrtstellung, in der der zugehörige Schwinghebel 2 annähernd waagrecht verläuft, bis in eine abgesenkte Stellung, in der der Fahrzeugaufbau auf dem Untergrund aufliegt, verdrehbar ist. Diese bei allen Ausführungsbeispielen vorhandenen Gemeinsamkeiten sind im einzelnen in Fig. 3 für das Ausführungsbeispiel nach Fig. 1 und 2 dargestellt, gelten aber bis auf maßliche Abweichungen auch für die anderen Ausführungsbeispiele. Bei der Tandemachsanordnung nach Fig. 1 und 2 stützen sich auf beiden Fahrzeugseiten die an den Halbachsrohren 5 angebrachten Hebel 5, von denen einer nach oben und einer nach unten weist, direkt über den Hydraulikzylinder 5 im Sinne eines Raddruckausgleichs gegeneinander ab.

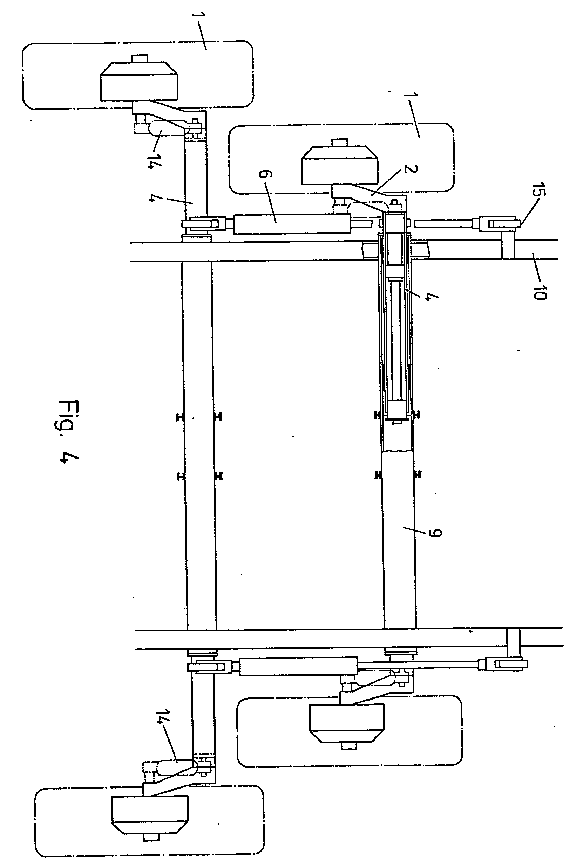

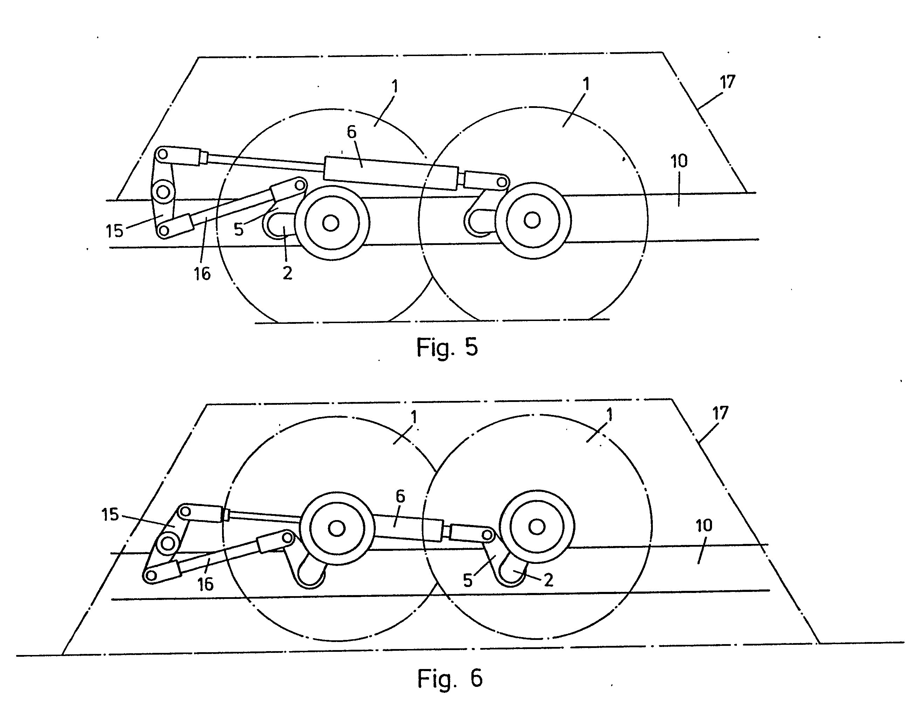

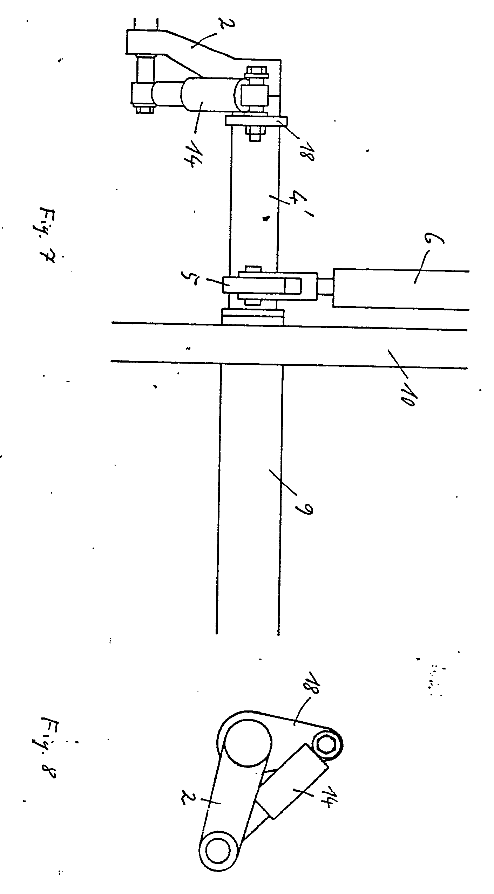

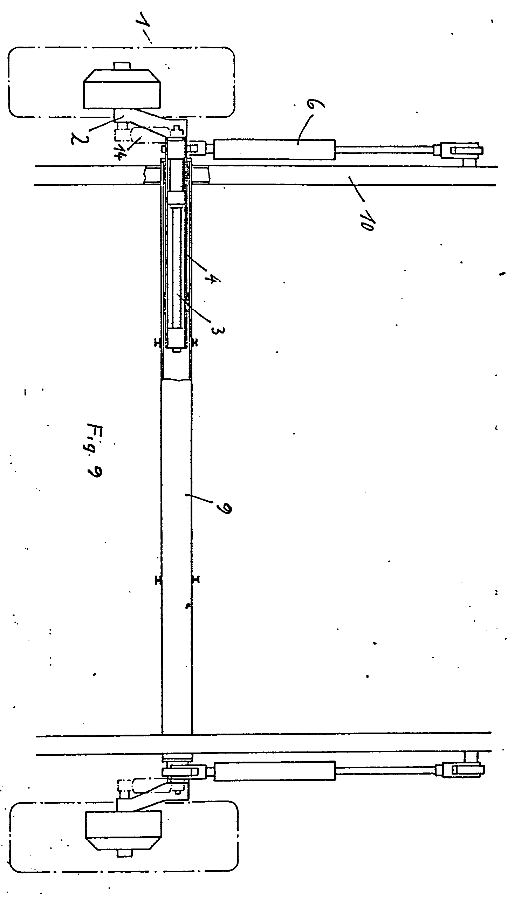

Aus Gründen der Übersichtlichkeit ist von den Rädern 1 jeweils nur die Radnabe mit Bremsstrommel dargestellt, d.H. ohne Folge und Reifen. Wie die Fig. 2 zeigt, kann der nach unten weisende Hebel 5 in der abgesenkten Stellung hinderlich sein. Auch kann der Achsabstand mit Rücksicht auf den Raddurchmesser und den Hydraulikzylinder nicht beliebig klein gemacht werden, was bei Rangieren von allem im Stand zu Schwierigkeiten und erhöhtem Reifenverschleiß führt. Diese Nachteile vermeidet die besonders bevorzugte Tandemachsanordnung nach den Fig. 4 bis 6, bei der die Räder 1 und 1' der beiden hintereinander angeordneten Fahrzeugachsen im Radstand zueinander versetzt und einander seitlich überlappend angeordnet sind. Das Halbachsrohr 4' der weiter außen angeordneten Räder 1' ist gegenüber dem Halbachsrohr 4 der weiter innen angeordneten Räder 1 verlängert ausgeführt und bietet besonders viel Platz für die Anordnung eines Stoßdämpfers 14. der einenends am Schwinghebel 2 und anderenends an einem am Halbachsrohr 4' angebrachten Hebel 18 angelenkt ist, wie die Fig. 7 und 8 zeigen. Insbesondere aus Fig. 5 ist ersichtlich, daß beide Hebel 5 nach oben weisen und zwischen den einem Hebel 5 und den Hydraulikzylinder 6 ein am Fahrzeugaufbau 10 schwenkbar gelagerter Umlenkhebel 15 und eine Stange 16 zwischengeschaltet sind. Aus Fig. 6 ist zu erkennen, daß in der abgesenkten Stellung alle Radaufhängungsteile in Radkasten verschwinden. Die in den Fig. 7 und 8 dargestellte Stoßdämpferanordnung ist selbstverständlich in entsprechender Ausführung auch beim Ausführungsbeispiel nach Fig. 1 bis 3 möglich.

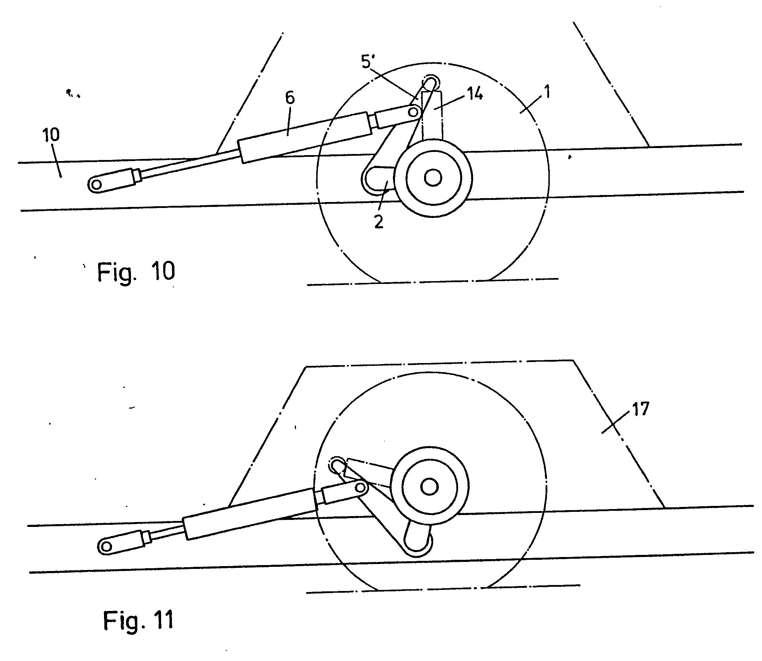

Die Fig. 9 bis 11 zeigen ein erstes Ausführungsbeispiel für eine Einzelachsanordnung mit einer Radaufhängung nach der Erfindung. Hier ist der Hydraulikzylinder 6 an einem Ende direkt am Fahrzeugaufbau 10 angelenkt, während sein anderes Ende an dem am Halbachsrohr 4 festen Hebel 5' angreift, an dem auch der Stoßdämpfer 14 angelenkt ist.

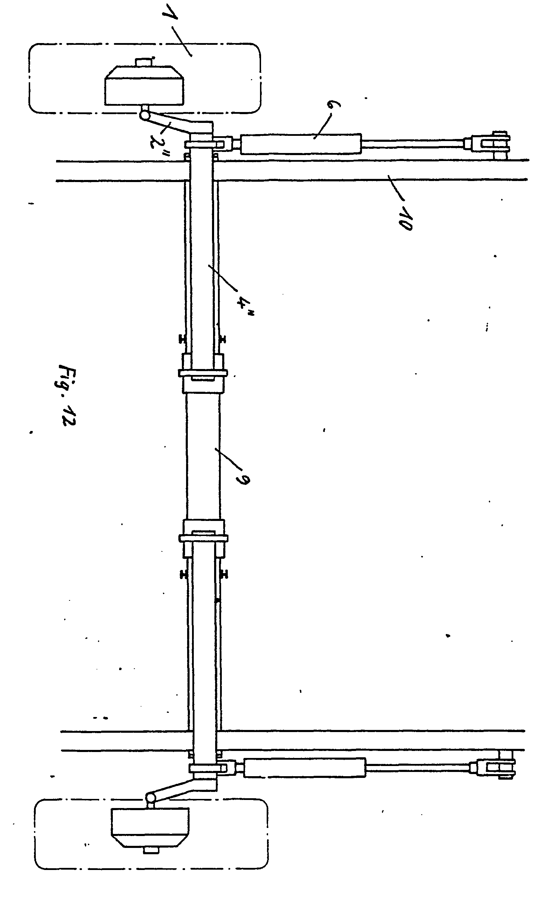

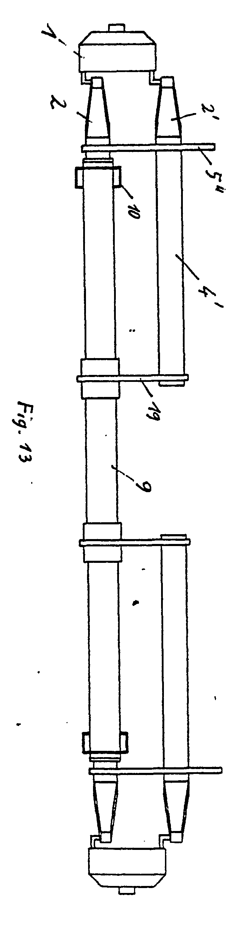

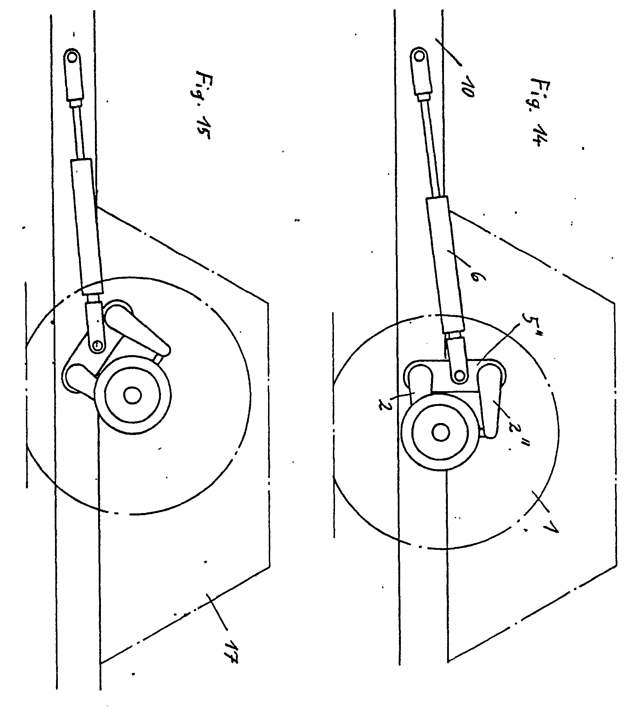

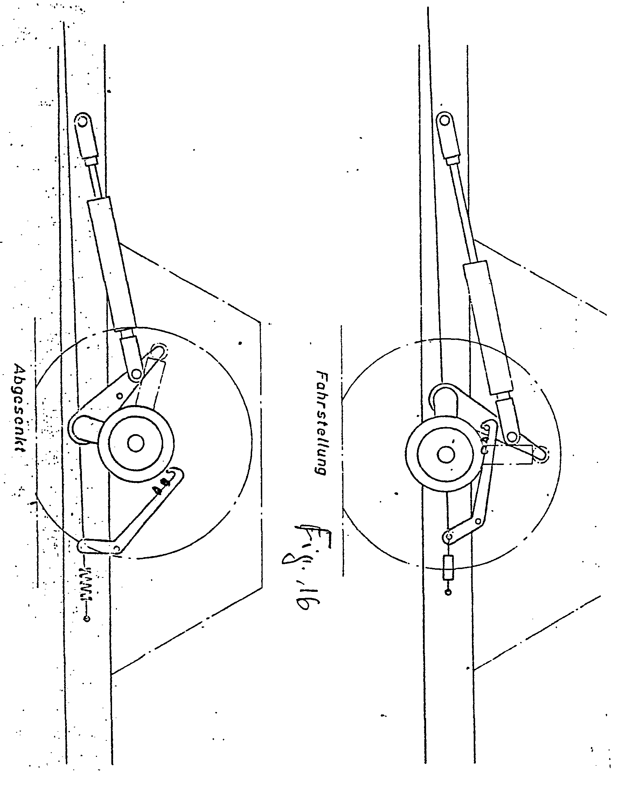

Bei der in Fig. 12 bis 15 dargestellten zweiten Ausführungsform einer Einzelachsaufhängung ist parallel zu dem im Tragrohr 9 drehbar gelagerten Halbachsrohren 4 für jedes Rad 1 ein zweites Halbachsrohr 4'' vorgesehen, das an seinem äußeren Ende an dem am ersten Halbachsrohr 4 festen, als Schwinge 5'' ausgebildeten Hebel für den Hydraulikzylinder 6 starr befestigt ist und an seinem inneren Ende eine weitere Schwinge 19 starr trägt, die auf dem Tragrohr 9 schwenkbar gelagert ist. Auch im zweiten Halbachsrohr 4'' ist ein Schwinghebel 2'' gegen die Federkraft eines nicht gezeigten Torsionsfederelements schwenkbar gelagert. Beide Schwinghebel 2 und 2'' bilden eine Parallellogrammführung für einen Träger 20 für den Radachszapfen. Selbstverständlich läßt sich auch bei dieser Ausführungsform ein nicht dargestellter Teleskop-Stoßdämpfer zwischen einem der Schwinghebel 2 oder 2'' und der Schwinge 5'' anordnen. In den Zeichnungen sind die jeweils zweiten Halbachsrohre 4'' in der Fahrtstellung senkrecht über dem Tragrohr 9 angeordnet. Die umgekehrte Anordnung der zweiten Halbachsrohre 4'' senkrecht unter Tragrohr 9 ergibt eine nocht günstigere Kinematik für das Einschwenken der Räder 1 in die Radkästen.

Bei allen Ausführungsbeispielen sind Drehstäbe 3 als Torsionsfederelemente vorgesehen. Selbstverständlich können jedoch alle anderen Torsionsfederelemente, wie z.B. Gummidrehschutzfedern oder sogenannten Neidhard-Federn, ebensogut verwemdet werden.

Jederzeit ist es möglich mit einem etwas länger ausfahrenden Hydraulikzylinder, wahlweise rechts oder links oder beidseitig die Schwinghebel weiter nach unten auszufahren und damit eine erhöhten Bodenfreiheit zu gewährleisten. Selbsverständlich ist auch dabei in jeder Richtung eine vollkommene Ausrichtung (in die Waage stellen nach allen Seiten) bei allen Achsausführungen möglich.

Es ist sinnvoll, derartige Fahrzeuge mit lastabhängigen Bremskraftreglern auszurüsten. Da jedoch keine feste Relation zwischen Aufbau bzw. Rahmen als gefederten Teil und Rad bzw. Schwinge als ungefederten Teil besteht, muß ein lastabhängiger Bremskraftregler hier, abweichend von der überlichen Anordnung, zwischen dem ungefederten Teil und dem ölhydraulisch verstellbaren, zur Absenkung dienenden Stellarm als quasi "gefederten" Teil des Fahrzeugs angeordnet werden.

Weiter kann es z.B. aufgrund zulassungrechtlicher Bestimmungen erforderlich sein, den hydraulisch betätigten Stellarm mechanisch z.B. formschlüssig zu arretieren. Zu diesem Zweck kann ein Hebel-ggf. mit mehreren Rastpositionen—verwendet werden, der drehbar am Rahmen des Fahrzeuges angelenkt ist, z.B. über ein Gestänge oder einen Bowdenzug getätigt wird und ein Rastelement am Stellarm sichernd hintergreift und/oder sich dagegen abstützt.

## Patentansprüche

1. Radaufhängung für absenkbare Fahrzeugaufbauten, insbesondere von Anhängern mit folgende Merkmalen:

a. die Radachszapfen werden von in Fahrzeuglängsrichtung verlaufenden Schwinghebeln (2) getragen, welche in Halbachsrohren (4, 4') gegen die Kraft von Torsionsfederelemente (3) elastisch verdrehbar gelagert sind.

b. die Halbachsrohre bilden die Federwiderlager der Torsionsfederelemente.

c. die Halbachsrohre der beiden Räder einer Fahrzeugachse sind um eine gemeinsame, in Fahrzeugquerrichtung verlaufende Achse drehbar am Fahrzeugaufbau gelagert.

d. die Halbachsrohre weisen an ihrem von der Fahrzeugmitte ausgesehen äußeren Ende, einen radial abstehenden Hebel (5) auf, ·an dem ein Hydraulikzylinder (6) angreift, mit dem die Halbachsrohre der beiden Räder einer Fahrzeugachse unabhängig voneinander aus einer Fahrstellung, in der die Schwinghebel annähernd waagrecht verlaufen, bis in eine abgesenkte Stellung, in der der Fahrzeugaufbau auf dem Untergrund, aufliegt, verdrehbar sind,

gekennzeichnet durch folgende Merkmale:

e. die Halbachsrohre (4, 4') der beiden Räder (1, 1') einer Fahrzeugachse sind in einem gemeinsamen, durchgehenden Tragrohr (9) gelagert, das am Fahrzeugaufbau (10) fest anbringbar ist.

f. die Halbachsrohre (4, 4') sind von den Außenenden her in das Tragrohr (9) eingesteckt und in diesem durch eine in eine Ringnut (12) am Halbachsrohr (4, 4') eingreifende Schraube (13) in Tragrohrlängsrichtung fixiert.

2. Radaufhängung nach Anspruch 1, dadurch gekennzeichnet, daß bei einer Tandemachsanordnung in an sich bekannter Weise die Hebel (5) der Halbachsrohre (4, 4') der Räder (1, 1') der gleichen Fahrzeugseite über den Hydraulikzylinder (6) im Sinne eines Raddrucksausgleichs gegeneinander abgestützt sind.

3. Radaufhängung nach Anspruch 2 dadurch gekennzeichnet, daß die in die gleiche Richtung weisenden Schwinghebeln (2) die gegeneinander abgestützen Hebel (5) der Halbachsrohre (4) in Fahrtstellung beide nach oben weisen und zwischen den einen Hebel (5) und den Hydraulikzylinder (6) ein am Fahrzeugbau (10) gelagerter Umlenkhebel (15) geschaltet ist.

4. Radaufhängung nach Anspruch 1, dadurch gekennzeichnet, daß die in dem Tragrohr (9) gelagerten Halbachsrohre (4) jeweils als radial abstehenden Hebel für den Hydraulikzylinder (6) eine Schwinge (5'') tragen, deren anderes Ende ein parallel angeordnetes zweites Halbachsrohr (4') trägt, welches an seinem inneren Ende an einer weiteren Schwinge (19) befestigt ist, die auf dem Tragrohr (9) drehbar gelagert ist, wobei in dem zweiten Halbachsrohr (4') ebenfalls ein Schwinghebel (2') gegen die Kraft eines Torsionsfederelementes elastisch verdrehbar gelagert ist, welcher mit dem anderen Schwinghebel (2) über einen Träger (20) für den Radachszapfen parallellogrammartig gelenkt verbunden ist.

5. Radaufhängung nach Anspruch 4, dadurch gekennzeichnet, daß die jeweils zweiten Hanlbachsrohre (4') in Fahrtstellung senkrecht über den Tragrohr (9) angeordnet ist.

6. Radaufhängung nach Anspruch 4, dadurch gekennzeichnet, daß die jeweils zweiten Halbachsrohre (4') in Fahrtstellung senkrecht unter dem Tragrohr (9) angeordnet sind.

7. Radaufhängung nach mindestens einem der Ansprüche 1—6, dadurch gekennzeichnet, daß zwischen dem Schwinghebel (2) und einem am zugehörigen Halbachsrohr (4) festen Hebel (5', 16) ein Teleskop-Stoßdämpfer (14) angeordnet ist, der beim Absenken mit verschwenkt wird.

8. Radaufhängung nach Anspruch 7, dadurch gekennzeichnet, daß der Teleskop-Stoßdämpfer (14) und der Hydraulikzylinder (6) über den gleichen Hebel (5') am Halbachsrohr (4) angreifen.

9. Radaufhängung nach Anspruch 7, dadurch gekennzeichnet, daß der Teleskop-Stoßdämpfer (14) und der Hydraulikzylinder (6) über unterschiedliche Hebel (18 bzw. 5) am Halbachsrohr 4 angreifen.

10. Radaufhängung nach mindestens einem der Ansprüche 1—9 dadurch gekennzeichnet, daß die verwendeten Hydraulikzylinder (6) einen so langen Hub aufweisen, daß sich mit ihnen zusätzlich zum Absenken auch eine erhöhte Bodenfreiheit einstellen läßt.

## Revendications

1. La suspension élastique de roue pour des chassis à descente, ici en particulier la suspension élastique des remorques, dont les caractéristiques sont citées par la suite:

a. Les tourillons des roues sont portées par des culbuteurs qui s'étendent à toute la longueur du véhicule et qui sont logés tournants et élastiques dans des essieux tubulaires type semi-floating contre la force des ressorts de torsion.

b. Les essieux tubulaires type semi-floating sont les ressorts de butée des ressorts de torsion

c. Les essieux tubulaires type semi-floating des deux roues d'une axe sont logés autour d'une axe commune qui s'étend dans la direction du véhicule et qui sont logés tournants à la carosserie

d. Vu du centre du véhicule, les essieux tubulaires type semi-floating possèdent au bout extérieur un levier, mis en position radiale, sur lequel un cylindre hydraulique produit de l'effet, avec lequel les essieux tubulaires type semi-floating des deux roues d'une axe, l'un indépendant de l'autre, peuvent être tourner à travers et ça, partant d'une position où les culbuteurs sont arrangés presque parallèlement et arrivent à une pression descente où le chassis est couché sur le fond;

Marqué par les caractéristiques suivantes:

e. Les essieux tubulaires type semi-floating (4, 4') des deux roues (1, 1') d'une axe sont logés dans un tube portant (9'), lequel on peut fixer au chassis (10')

f. Les essieux tubulaires type semi-floating (4, 4') sont mis de leurs bouts extérieurs dans le tube portant (9') et fixés dedans en sens longitudinal par une vis (13') qui s'engrène dans une rainure annulaire (12'), située à l'essieu tubulaire.

2. Concernant la spécification du brevet N° 1, la suspension élastique de roue est caractérisée par le fait que quand il s'agit d'un système en tandem, les leviers (5) des essieux tubulaires type semi-floating (4, 4') des roues (1, 1') de la meme côté de véhicule sont appuyés l'un à l'autre sur le cylindre hydraulique (6') en sens d'une compensation de la charge des roues.

3. Concernant la sécification du brevet N° 2, la suspension élastique de roue est caractérisée par le fait que quand il s'agit des deux remorques qui montrent dans la même direction, les leviers, appuyés l'un à l'autre (5') des essieux tubulaires type semi-floating (4') montrent en position de marche vers le haut et que entre l'un des deux leviers (5') et le cylindre hydraulique (6') est mis en circuit un levier de renvoi (15') qui est logé à la construction de véhicule (10').

4. Concernant la spécification du brevet N° 1 la suspension élastique de roue est caractérisée par le fait que les essieux tubulaires type semi-floating (4'), logés dans le tube portant, portent comme levier en position radiale pour le cylindre hydraulique (6') un culbuteur (5') dont l'autre bout porte un deuxième essieu tubulaire, disposé parallelement (4'), lequel est fixé de son bout intérieur à une autre culbuteur (19') qui est logé tournant sur le tube portant (9'), à l'occasion de quoi dans le deuxième essieu tubulaire (4') est logé aussi un culbuteur (2') tournant et élastique contre la force des ressorts de torsion, lequel est combiné flexiblement et comme un parallelogramme avec l'autre culbuteur (2'), à l'aide d'un support (20') pour le tourillon de l'axe de roue.

5. Concernant la spécification du brevet N° 4, la suspension élastique de roue est caractérisée par le fait que les deuxièmes essieux tubulaires (4') en position de marche sont arrangés verticalement audessus du tube portant (9').

6. Concernant la spécification du brevet N° 4, la suspension élastique de roue est caractérisée par le fait que les deuxièmes essieux tubulaires (4') en position de marche sont arrangés verticalement audessous du tube portant (9').

7. Concernant au moins l'un des spécifications de brevet N° 1 à N° 6 qui sont caractérisées par le fait que entre le culbuteur (2') et le levier (5', 16'), celui fixé à l'un des essieux tubulaires correspondants, est arrangé un amortisseur téléscopique (14') qui en baissant est obliquité aussi.

8. Concernant la spécification du brevet N° 7, la suspension élastique de roue est caractérisée par le fait que l'amortisseur téléscopique (14') et le cylindre hydraulique (6') produisent de l'effet sur le même levier (5') à l'essieu tubulaire (4').

9. Concernant la spécification du brevet N° 7 qui est caractérisée par le fait que l'amortisseur téléscopique (14') et le cylindre hydraulique (6') produisent de l'effet sur des leviers différents (18' respectivement 5') à l'essieu tubulaire 4.

10. Concernant au moins l'un des spécifications de brevet N° 1 à N° 9 qui sont caractérisées par le fait que les cylindres hydrauliques (6') montrent une levée tellement longue qu'on peut mettre, sauf qu'on peut réaliser une position descente, une position de garde d'encombrement élevée.

**Claims**

1. Wheelsuspension for lowerable vehicles, especially from trailers with the following features:

a) the wheels tubes are carried from swingable levers which are orientated in the driving direction. These are elastically twistable against the force of springloaded elements.

b) the wheel-tubes do represent the base for the torsions-Spring-elements.

c) the wheel-tubes for both wheels in one axle do have the same turnable base.

d) the axle-tubes do have radial fixed levers on the outsides of the vehicle, which are each connected with a hydraulic cylinder. The hydraulic will lower the vehicle (each side independently if wished) until the levers are parallel to the ground and the vehicle-base (body) will touch the street surface;

All this is marked with the following features:

e) the wheel-tubes 4, 4' from both wheels (1, 1') are based in a one piece tube (9) which is attachable on the vehicle base frame (10)

f) the wheel-tubes (4, 4') are mounted from the outside into the one piece tube (9) and fixed with a screw which hold the wheel-tubes (4, 4') in a ring slot (12)

2. Wheel suspension an Claim 1, marked with the setup for a tandem, where the levers (5) for the wheel-tubes (4, 4') of the wheels (1, 1') supported by the hydraulic cylinders (6) against each other through a pressure balance (compensation).

3. Wheel suspension in Claim 2 marked with the setup showing swingable levers (2) against each other supported levers (5) and the wheel-tubes (4) do point upwards while there is another lever (15) based on the vehicle frame (10) between it and the hydraulic cylinder (6).

4. Wheelsuspension with Claim 1, marked through the fact, that in the one piece tube (9) based wheel tubes (4) carries a swing (5) for a radial mounted lever on the hydraulic cylinder (6). At the other end there is placed a second wheel tube (4') which hold in its inner end another swing (19) and is supported turnable on the one piece tube (9). The second wheel tube (4) is connected elastically and also turnable with a swing lever (2) against the force of a torsion spring loaded element. This element is mounted in connection with the other through a holder (20) like a parallelogramm.

5. Wheel suspension in Claim 4 marked with the fact, that the second wheel tubes (4') each are vertically placed over the one piece tube (9').

6. Wheel suspension in Claim 4 marked with the fact, that the second wheel tubes (4') each are vertically placed under the one piece tube (9).

7. Wheel suspension marked with the fact that at least one of the Claims 1—6 is correct where between a swing lever (2) and a corresponding wheel tube (4) a fixed lever (5', 16) a telescope damper (14) is turned when the vehicle gets lowered.

8. Wheel suspension in Claim 7 marked with the fact, that the telescope damper (4) and the hydraulic cylinder (6) do act through the same lever (5) and therefore on the wheel tube (4).

9. Wheel suspension in Claim 7 marked with the fact, that the telescope damper (14) and the hydraulic cylinder (6) are connected through different lever (18 or 5) acting the wheel suspension (4).

10. Wheel suspension in at least on the Claims 1—9 marked through the fact, that the used hydraulic cylinder (6) shows a long enough stroke to lift the vehicle over the normal floor height in addition to lowering it.

Fig. 1

Fig. 2

Fig. 3

Fig. 4

3

Fig. 6

Fig. 5

Fig. 7

Fig. 8

Fig. 9

Fig. 11

Fig. 10

Fig. 12

Fig. 13

Fig. 15

Fig. 14

Abgesenkt

Fahrstellung

Fig. 16